# EUROPEAN PATENT SPECIFICATION

(11) **EP 1 672 909 B1**
(45) Date of publication and mention of the grant of the patent: **30.08.2017**
(21) Application number: 05292727.4
(22) Date of filing: 16.12.2005
(51) Int. Cl.: H04L 27/26, H04N 5/44, H04N 5/08, H04N 21/43, H04N 21/61

(54) **Apparatus for synchronization acquisition in digital receiver and method thereof**
Vorrichtung und Verfahren zur Synchronisationserfassung in einem digitalen Empfänger
Dispositif et procédé d'acquisition de synchronisation pour un récepteur numérique

(30) Priority: 17.12.2004 KR 2004107722
(43) Date of publication of application: 21.06.2006
(73) Proprietor: LG Electronics Inc., Seoul 150-721 (KR)
(72) Inventor: Ahn, Keu Hee, Bupyeong-gu, Incheon 403-761 (KR)
(74) Representative: Cabinet Plasseraud

(56) References cited:
- EP-A2- 0 877 526
- WO-A1-2004/013999
- US-B1- 6 470 030

## Description

### BACKGROUND OF THE INVENTION

### Field of the Invention

The present invention relates to a synchronization acquisition, and more particularly, to an apparatus for synchronization acquisition and method thereof.

### Discussion of the Related Art

Generally, the European transmission system standard of terrestrial channel of digital TV is DCB-T (digital video broadcasting-terrestrial). And, the DVB-T adopts the OFDM (orthogonal frequency division multiplexing) transmission system.

The OFDM transmission system is strong against channel distortion caused by multi-path in a wireless broadband broadcasting system.

However, the OFDM transmission system is sensitive to synchronizations (symbol synchronization, frequency synchronization, timing synchronization). In case of failing in performing accurate synchronization between transmission and reception, the OFDM transmission system brings about a problem of distortion of a reception signal. Hence, many efforts are made to solve the problem.

Specifically, stable and fast synchronization acquisition is very important to design a DVB-T receiver. Hence, the demand for a systematic synchronization acquiring apparatus and method thereof bas risen.

US6470030 discloses an OFDM system that performs demodulation by sharing memories and operators in a time-divisional manner. EP0877526 discloses a demodulator for OFDM that is suitable for implementation in a single chip.

### SUMMARY OF THE INVENTION

Accordingly, the present invention is directed to an apparatus for synchronization acquisition and method thereof that substantially obviate one or more problems due to limitations and disadvantages of the related art.

An object of the present invention is to provide an apparatus for system synchronization acquisition in a digital receiver, by which a synchronization unit is precisely locked and by which fast tracking performance is provided

Another object of the present invention is to provide a method of system synchronization acquisition in a digital receiver, by which a lock process can be smoothly performed between elements and by which an optimal convergence time is provided.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an apparatus for synchronization acquisition in a digital receiver according to claim 1 is provided.

In another aspect of the present invention, in receiving a digital signal, a method of synchronization acquisition in a digital receiver according to claims 15 is provided.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the inventions. In the drawings:
FIG. 1 is a block diagram of an apparatus for synchronization acquisition in a digital receiver according to the present invention;
FIG. 2 is a block diagram of a reception synchronization unit of an apparatus for synchronization acquisition according to the present invention; and
FIG. 3A and FIG. 3B are flowcharts of a method of synchronization acquisition in a digital receiver according to the present invention.

### DETAILED DESCRIPTION OF THE INVENTION

The invention is defined by the claims. The following references to embodiments are to be understood as mere examples which are useful for understanding the invention. Reference will now be made in detail to the preferred embodiments of the present invention, examples of which are illustrated in the accompanying drawings. Wherever possible, the same reference numbers will be used throughout the drawings to refer to the same or like parts.

The present invention provides an apparatus for synchronization acquisition in a digital receiver, characterized in including a pre-processing unit digitally converting a reception signal by processing the reception signal in an analog area, a reception synchronization unit comprising a plurality of different synchronization units, each performing a different synchronization process sequentially by receiving the pre-processed signal, the reception synchronization unit controlling a start of the synchronization process of a next synchronization unit according to a presence or non-presence of the synchronization acquisition of a current synchronization unit, and a post-processing unit decoding the synchronization-acquired signal.

According to another embodiment of the present invention, provided is a method of synchronization acquisition in a digital receiver in receiving a digital signal, which is characterized in including a step (a) of converting a received analog signal to a digital signal, a step (b) of sequentially performing different synchronization processes by receiving the digital signal and controlling a start of a next synchronization process according to a presence or non-presence of the synchronization acquisition of a current synchronization process, and a step (c) of decoding the synchronized signal.

Therefore, the present invention optimizes synchronization acquisition of a reception signal by reducing the instability of a receiver and the excessive sync time taken for tracking.

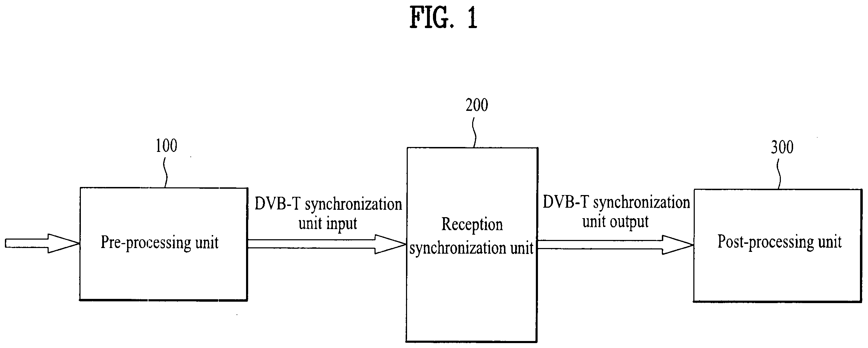

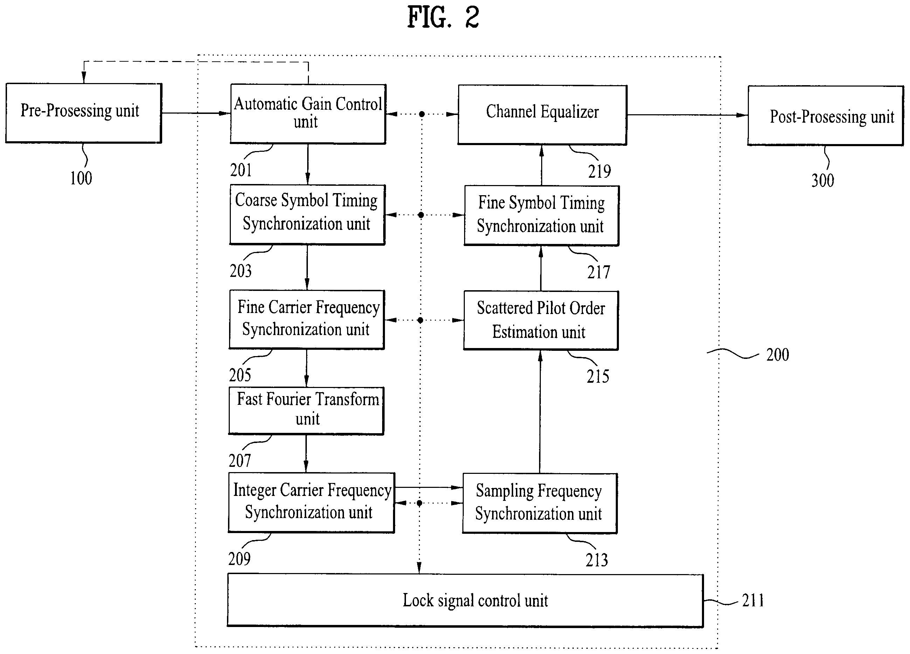

FIG. 1 is a block diagram of an apparatus for synchronization acquisition in a digital receiver according to the present invention and FIG. 2 is a block diagram of a reception synchronization unit of an apparatus for synchronization acquisition according to the present invention.

Referring to FIG. 1, a digital receiver includes a pre-processing unit 100, a reception synchronization (synchronization acquisition) unit 200 and a post-processing unit 300.

The pre-processing unit 100 includes a reception unit receiving an analog signal, a tuner converting the received analog signal to an intermediate frequency, and an A/D converter converting the converted analog signal to a digital signal to deliver to the reception synchronization unit 200.

In the pre-processing unit 100, the reception unit receives a 50MHz∼860MHz RF (radio frequency) signal in an analog area. The tuner (not shown in the drawing) receives the RF signal from the reception unit and then converts it to an intermediate (IF) signal. The A/D converter (not shown in the drawing) converts the IF signal to a digital signal to deliver to the reception synchronization unit 200. In this case, a SAW (surface acoustic wave) filter is generally provided to a rear end of the tuner. The SAW filter mainly includes an electrode coated on a crystal. Since an acoustic wave propagates on a surface of the crystal at a considerably low speed (about 10⁻⁵ of free space propagation speed), the SAW filter is configured suitable for a signal processing on a relatively small area. Thus, the digital signal is inputted to the reception synchronization unit 200 via the pre-processing unit 100.

Referring to FIG. 2, the reception synchronization unit 200 includes an AGC (Automatic Gain Control) unit 201, a CSTS (Coarse Symbol Timing Synchronization) unit 203, an FCFS (Fine Carrier Frequency Synchronization) unit 205, an FFT (Fast Fourier Transform) unit 207, an ICFS (Integer Carrier Frequency Synchronization) unit 209, a SFS (Sampling Frequency Synchronization) unit 213, an SPOE (Scattered Pilot Order Estimation) unit 215, a FSTS (Fine Symbol Timing Synchronization) unit 217, a channel equalizer 219 and a lock signal control unit 211.

A gain of the digitally converted signal outputted from the pre-processing unit 100 is compensated by the automatic gain control unit 201. The automatic gain control unit 201 is to compensate a gain of a signal so that the A/D converter (not shown in the drawing) can normally convert the analog signal to the digital signal since the IF signal having passed through the SAW filter (not shown in the drawing) of the pre-processing unit 100 is weak. By the automatic gain control unit 201 according to the present invention, as shown in FIG. 2, the gain value is calculated in a digital area to be fed back to the pre-processing unit 100.

Meanwhile, the automatic gain control unit 201 includes a lock detector measuring an average of a reception power from reception input data to decide a difference from a preset reference power. The automatic gain control unit 201 carries out acquisition decision and tracking of a gain through the lock detector. And, the lock detector outputs an AGC lock signal to the lock signal control unit 211.

The signal, of which gain is recovered by the automatic gain control unit 201, is inputted to the coarse symbol timing synchronization unit 203. The coarse symbol timing synchronization unit 203 extracts a valid data sample only except a guard interval from a gain-covered reception signal sample and then delivers the extracted valid data sample to the FFT unit 207 provided to its rear end. Coarse symbol timing synchronization, which is carried out in a time domain followed by the FFT unit 207, is very sensitive to a channel. Hence, it is difficult to estimate a precise FFT window location. Yet, an approximate FFT window location can be estimated.

The coarse symbol timing synchronization unit 203 includes a lock detector. And, the lock detector recognizes the AGC lock signal delivered from the lock signal control unit 211 as a start signal of coarse symbol timing synchronization acquisition, estimates a symbol timing synchronization, measures a correlation average power, and then decides a difference from a preset reference value. If the calculated correlation power is greater than the reference value, a symbol timing lock signal is outputted to the lock signal control unit 211. The lock detector outputs a coarse symbol timing lock signal to the lock signal control unit 211.

The fine carrier frequency synchronization unit 205 having received the symbol timing lock signal from the lock signal control unit 211 removes frequency offset and phase jitter of a carrier caused by the tuner and mixer of the analog reception unit (pre-processing unit 100) and plays a role in converting a band pass digital signal to a baseband digital signal. The fine carrier frequency synchronization unit 205 can estimate a frequency offset amounting to a half or less of a subcarrier interval. The fine carrier frequency synchronization unit 205 includes a lock detector. And, the lock detector recognizes the coarse symbol timing lock signal received from the lock signal control unit 211 as a start signal of fine carrier frequency synchronization, estimates fine frequency synchronization, and then decides a difference between a timing error average and a preset reference value. Fine carrier frequency acquisition is decided using the lock detector. In particular, if the timing error average is smaller than the preset value, the lock detector outputs a lock signal of the fine carrier frequency synchronization unit 205 to the lock signal control unit 211.

The signal, on which the fine carrier frequency synchronization is carried out, is converted to a signal of a frequency area by the fast Fourier transform (FFT) unit 207 according to each mode (2k/8k) of the DVB-T receiver.

The signal converted into the frequency area is inputted to the integer carrier frequency synchronization unit 209. The integer carrier frequency synchronization unit 209 recognizes the fine carrier frequency lock signal delivered from the lock signal control unit 211 as a start signal of integer carrier frequency synchronization and then estimates integer frequency synchronization. The integer carrier frequency synchronization unit 209 includes a lock detector deciding a difference from a preset correlation average power and decides integer carrier frequency acquisition through the lock detector.

If the correlation average power is greater than a reference value, a lock signal of integer carrier frequency recovery is outputted to the lock signal control unit 211. In dosing so, two carrier frequency synchronizations are not simultaneously acquired. This is because the ±0.5 problem is brought about due to the OFDM modulation/demodulation characteristics if the integer is simultaneously activated prior to acquiring the fine carrier frequency.

The integer-frequency-synchronized signal is inputted to the sampling frequency synchronization unit 213. As sampling frequency synchronization carried out by the sampling frequency synchronization unit 213 employs a resampler to convert analog data to digital data of a fixed frequency. And, clock recovery of entire sample sequences is carried out by the resampler. Thus, a whole process is digitally carried out. Thus, the sampling frequency synchronization unit 213 needs no other analog devices but an analog/digital converter. Hence, the sampling frequency synchronization unit 213 can be simply implemented and has a characteristic of eliminating device noise.

The sampling frequency synchronization unit 213 performs sampling with a regular cycle interval given as a sampling frequency in an inputted continuous OFDM signal. And, the sampling frequency synchronization unit 213 recognizes the integer carrier frequency lock signal delivered from the lock signal control unit 211 as an acquisition start signal of the sampling frequency synchronization and then estimates the sampling frequency synchronization.

Moreover, the sampling frequency synchronization unit 213 includes a lock detector deciding a difference from a preset timing error average and decides an acquisition of the sampling frequency using the lock detector. The lock detector compares a timing error average value to a preset reference value. If the timing error average value is smaller than the reference value, the lock detector outputs a lock signal of the sampling frequency synchronization unit to the lock signal control unit 211.

Subsequently, the sampling-frequency-synchronized signal is inputted to the scattered pilot order estimation unit 215.

A DVB-T transmission frame has a structure that reference pilots (continuous pilot, scattered pilot) are inserted in its data payload. The scattered pilot within the frame is repeated each four OFDM symbols [k = 3 * (1mod4) + 12p, where p is an integer].

Hence, an order of the repeated scattered pilots (index1, index2, index3, index4) needs to be estimated. The scattered pilot order estimation unit 215 recognizes the sampling frequency lock signal delivered from the lock signal control unit 211 as a start signal of scattered pilot order estimation acquisition and then estimates a scattered pilot order.

The scattered pilot order estimation unit 215 includes a lock detector. The scattered pilot order estimation unit 215 decides whether a preset scattered pilot order index1 is equal to an estimated scattered pilot order index. And, the scattered pilot order estimation unit 215 decides an acquisition of the scattered pilot order estimation unit 215 using the lock detector.

If the estimated scattered pilot order index1 is equal to the preset scattered pilot order index1, the lock detector outputs a lock signal of the scattered pilot order estimation unit 215 to the lock signal control unit 211.

Subsequently, the fine symbol timing synchronization unit 217 performs a function of estimating a remaining FFT window offset remaining in the coarse symbol timing synchronization unit 203 using the scattered pilot. In particular, the fine symbol timing synchronization unit 217 recognizes the scattered pilot order estimation lock signal delivered from the lock signal control unit 211 as a fine symbol timing synchronization acquisition start signal and then estimates fine symbol timing synchronization.

In doing so, the fine symbol timing synchronization unit 217 needs not to use a separate lock detector unlike other synchronization units. Yet, the fine symbol timing synchronization unit 217 generates a fine symbol offset valid signal t output to the lock signal control unit 211.

The fine-symbol-timing-synchronized signal is inputted to the channel equalizer 219 connected to its rear end. In the digital transmission system such as HDTV, a bit detection error is brought about in a receiving side by a distortion caused by a transmission signal passing through a multi-path channel, an interference caused by a PAL signal, a distortion caused by a transceiver system and the like. In particular, the signal propagation via the multi-path brings about inter-symbol interference to become a major cause of the bit detection error. Hence, to correct the signal distortion, a channel equalizing process is carried out.

The channel equalizer 219 recognizes the fine symbol offset valid signal delivered from the lock signal control unit 211 as an acquisition start signal of the channel equalizer and then executes the channel equalization.

As mentioned in the above description, the major objects of the reception synchronization blocks of the DVB-T receiver according to the present invention are to remove the corresponding noises (gain offset, timing offset, frequency offset, phase offset, ghost, etc.) and to minimize MSE (means-square error).

Hence, a reference for deciding whether the units correctly eliminate the corresponding noises is needed. And, the lock detectors are used as the decision means, correspondingly.

The lock detectors can be divided into a manual type and an auto type. Compared to the auto type lock detector, the manual type lock detector fails in effectively coping with a channel environment and randomness of system. Hence, the manual type lock detector has difficulty in being used in general communication demodulations (OFDM, VSB, QAM, QPSK, etc.). Hence, the auto type lock detectors are employed. In the DVB-T receiver including the various units, each having the lock detector, of the reception synchronization unit, the lock signal control unit 211 optimized in aspect of the system is used to secure the system stability and fast convergence speed.

The lock signal control unit 211 carries out a systematic acquisition processing to secure the system stability and the optimal convergence time in the sequential and dependent signal flow of each of the element units.

Meanwhile, the reception signal through the channel equalization is decoded by the post-processing unit (channel decoder) 300. The decoded A/V data is displayed on a screen 9not shown in the drawing).

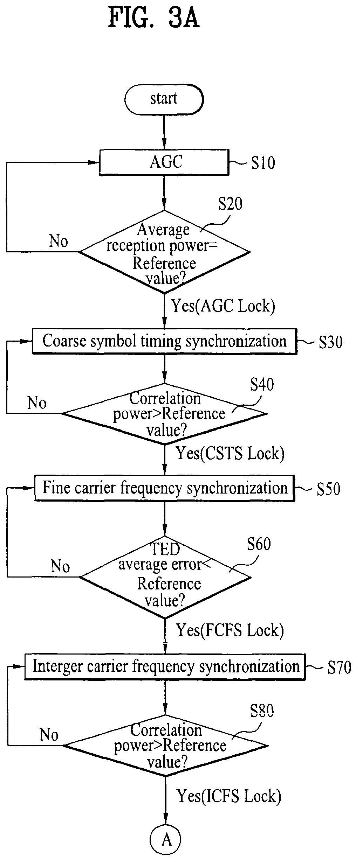

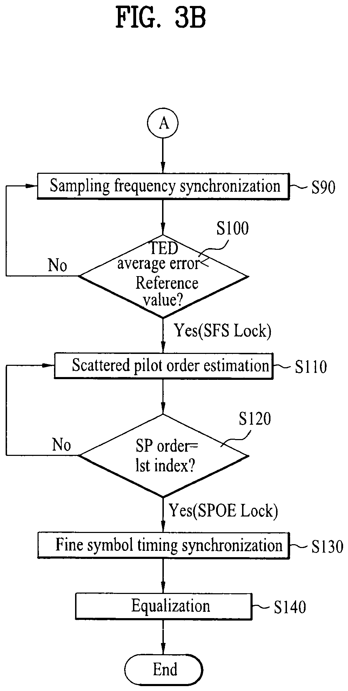

FIG. 3A and FIG. 3B are flowcharts of a transition process of a systematic synchronization acquisition processor according to the present invention. A method of synchronization acquisition in a digital receiver according to the present invention is explained with reference to FIG. 3A and FIG. 3B as follows.

In receiving a digital signal, a method of synchronization acquisition in a digital receiver according to the present invention includes the steps of receiving an analog signal to digitally convert, detecting a first lock signal by recovering a gain of the digitally converted signal and by deciding whether a corresponding noise is removed, detecting a second lock signal by performing coarse symbol timing synchronization in a manner of recognizing the first lock signal as a start signal and extracting valid data of the gain-recovered signal only to deliver and by deciding whether a corresponding noise is removed, detecting a third lock signal by performing fine carrier frequency synchronization to convert a baseband digital signal to a pass band digital signal in a manner of recognizing the second lock signal as a start signal and eliminating a frequency offset and phase noise of the extracted valid data and by deciding whether a corresponding noise is removed, converting the pas band digital signal into a frequency domain, detecting a fourth lock signal by performing integer carrier frequency synchronization to compensate the frequency-domain-converted signal in a manner of recognizing the third lock signal as a start signal and estimating an integer multiplication of a subcarrier interval closest to an initial frequency offset and by deciding whether a corresponding noise is removes, detecting a fifth lock signal by performing sampling frequency synchronization to carry out sampling on the compensated signal in a manner of recognizing the fourth lock signal as a start signal and by deciding whether a corresponding noise is removed, detecting a sixth lock signal by estimating an order of a scattered pilot signal included in the received signal in a manner of recognizing the fifth lock signal as a start signal and by deciding whether a corresponding noise is removed, performing fine symbol timing synchronization to estimate a remaining FFT window offset using the estimated scattered pilot in a manner of recognizing the sixth signal as a start signal, and performing channel equalization to correct a distortion of the received signal.

Referring to FIG. 3A and FIG. 3B, a gain of a signal, which was digitally converted and outputted from the pre-processing unit 100, is compensated by the automatic gain control unit 210 (S10). For the gain-compensated signal, an average reception power is compared to a preset reference value (S20). If the average reception power is equal to the reference value, coarse symbol timing synchronization is carried out on the gain-compensated signal (S30). For the coarse-symbol-timing-synchronizes signal, a correlation power is compared to the preset reference value (S40). If the correlation power is greater than the reference value, fine carrier frequency synchronization is carried out (S50). For the fine-carrier-frequency-synchronized signal, a timing error average is compared to a preset reference value (S60). If the timing error average is smaller than the reference value, integer carrier frequency synchronization is carried out (S70). For the integer-carrier-frequency-synchronized signal, the correlation power is compared to the preset reference value (S80). If the correlation power is greater than the reference value, sampling frequency synchronization is carried out (S90). For the sampling-frequency-synchronized signal, the timing error average is compared to the preset reference value (S100). If the timing error average is smaller than the reference value, a scattered pilot order is estimated (S110). If the estimated scattered pilot order index is equal to a preset scattered pilot order index 1 (S120). Fine symbol timing synchronization is carried out (S130). Channel equalization is carried out on the fine-symbol-timing-synchronized signal (S140) to acquire a synchronization of a reception signal.

Meanwhile, although the DVB-T receiver is explained in the above description, the present invention is applicable to a DVB-H receiver as well.

## Claims

1. An apparatus for synchronization acquisition in a digital receiver, comprising:
a pre-processing unit (100) receiving an analog signal and converting the received analog signal to a digital signal;
a reception synchronization unit (200) comprising a plurality of different synchronization units, each performing a different synchronization process sequentially by receiving the digital signal, the reception synchronization unit (200) controlling a start of the synchronization process of a next synchronization unit according to a presence or non-presence of the synchronization acquisition of a current synchronization unit; and
a post-processing unit (300) decoding the synchronization-acquired signal,
**characterized in that**
the reception synchronization unit (200) comprises an automatic gain control unit (201), a coarse symbol timing synchronization unit (203), a fine carrier frequency synchronization unit (205), an integer carrier frequency synchronization unit (209), a sampling frequency synchronization unit (213), a scattered pilot extracting unit (215) and a fine symbol timing synchronization unit (217),
the fine carrier frequency synchronization (205) unit recognizes a lock signal of the coarse symbol timing synchronization unit (203) inputted from a lock signal control unit (211) as a start signal of a fine carrier frequency synchronization acquisition, eliminates a frequency offset and phase jitter of the pre-processing unit (100), and converts a band pass digital signal to a baseband digital signal,
the integer carrier frequency synchronization unit (209) recognizes a lock signal of the fine carrier frequency synchronization unit (205) inputted from the lock signal control unit (211) as a start signal of an integer carrier frequency synchronization acquisition and compensates the signal processed by the fine carrier frequency synchronization unit (205) by estimating an integer multiplication of an interval of a subcarrier closest to an initial frequency offset, and
the sampling frequency synchronization unit (213) recognizes a lock signal of the integer carrier frequency synchronization unit (209) inputted from the lock signal control unit (211) as a start signal of a sampling frequency synchronization acquisition and performs sampling the integer carrier frequency synchronized signal.

2. The apparatus of claim 1, the pre-processing unit (100) comprising:
a tuner tuning a broadcast signal of a specific channel to convert to an intermediate frequency signal; and
an A/D converter converting the converted intermediate frequency signal to a digital signal to deliver to the reception synchronization unit (200).

3. The apparatus of claim 1, the reception synchronization unit (200) comprising:
the lock signal control unit (211) outputting a control signal for controlling the start of the synchronization process of the next synchronization unit according to the presence or non-presence of the synchronization acquisition of the current synchronization unit; and
a lock detector outputting a result of a presence or non-presence of the synchronization acquisition of a corresponding reception signal to the lock signal control unit (211) wherein the presence or non-presence of the synchronization acquisition is decided by each of the synchronization units of the reception synchronization unit.

4. The apparatus of claim 1, wherein the automatic gain control unit (201) compensates a gain in a digital area by receiving the digitally converted signal from the pre-processing unit (100), wherein the lock detector of the automatic gain control unit (201) measures an average value of a reception power of the reception signal to decide a difference from a preset reference value, and wherein if the average value of the reception power is equal to the preset reference value, the lock detector of the automatic gain control unit (201) outputs a lock signal to the lock signal control unit (211).

5. The apparatus of claim 1, wherein the coarse symbol timing synchronization unit (203) recognizes a lock signal of the automatic gain control unit (201) inputted from the lock signal control unit (211) as a start signal of a coarse symbol timing synchronization acquisition and extracts rest valid data except a guard interval from the gain-compensated signal.

6. The apparatus of claim 3, wherein the lock detector of the coarse symbol timing synchronization unit (203) decides a difference from a preset reference value by measuring a correlation average power value and outputs a lock signal to the lock signal control unit (211) if the measured correlation average power value is greater than the preset reference value.

7. The apparatus of claim 3, wherein the lock detector of the fine carrier frequency synchronization unit (205) decides a difference from a preset reference value by measuring a timing error average value and outputs a lock signal to the lock signal control unit (211) if the measured timing error average value is smaller than the preset reference value.

8. The apparatus of claim 1, wherein the integer carrier frequency synchronization unit (209) recognizes a lock signal of the coarse symbol timing synchronization unit (203) inputted from the lock signal control unit (211) as a start signal of an integer carrier frequency synchronization acquisition and compensates the signal processed by the fine carrier frequency synchronization unit (205) by estimating an integer multiplication of an interval of a subcarrier closest to an initial frequency offset.

9. The apparatus of claim 3, wherein the lock detector of the integer carrier frequency synchronization unit (209) decides a difference from a preset reference value by measuring a correlation average power value and outputs a lock signal to the lock signal control unit (211) if the measured correlation average power value is greater than the preset reference value.

10. The apparatus of claim 3, wherein the lock detector of the sampling frequency synchronization unit (213) decides a difference from a preset reference value by measuring a timing error average value and outputs a lock signal to the lock signal control unit (211) if the measured timing error average value is smaller than the preset reference value.

11. The apparatus of claim 1, wherein the scattered pilot estimation unit (215) recognizes a lock signal of the sampling frequency synchronization unit (213) inputted from the lock signal control unit (211) as a start signal of a scattered pilot estimation and estimates an order of a scattered pilot signal included in the sampled signal.

12. The apparatus of claim 3, wherein the lock detector of the scattered pilot estimation unit (215) decides a difference between an estimated scattered pilot order index and a preset scattered pilot index 1 and wherein if the estimated scattered pilot order index is equal to the preset scattered pilot index 1, the lock detector of the scattered pilot estimation unit (215) outputs a lock signal to the lock signal control unit (211).

13. The apparatus of claim 1, wherein the fine symbol timing synchronization unit (217) recognizes a lock signal of the scattered pilot estimation unit inputted from the lock signal control unit as a start signal of a fine symbol timing synchronization acquisition and estimates a remaining window offset of the coarse symbol timing synchronization unit based on the estimated scattered pilot.

14. The apparatus of claim 1, wherein the fine symbol timing synchronization unit (217) generates a fine symbol offset valid signal to output to the lock signal control unit (211).

15. In receiving a digital signal, a method of synchronization acquisition in a digital receiver, comprising:
a step (a) of converting a received analog signal to a digital signal;
a step (b) of sequentially performing different synchronization processes by receiving the digital signal and controlling a start of a next synchronization process according to a presence or non-presence of the synchronization acquisition of a current synchronization process; and
a step (c) of decoding the synchronized signal,
**characterized in that**
the step (b) comprising the steps of:
detecting a first lock signal by recovering a gain of the digitally converted signal and by deciding whether a corresponding noise is removed;
detecting a second lock signal by performing coarse symbol timing synchronization in a manner of recognizing the first lock signal as a start signal and extracting valid data of the gain-recovered signal only to deliver and by deciding whether a corresponding noise is removed;
detecting a third lock signal by performing fine carrier frequency synchronization to convert a baseband digital signal to a pass band digital signal in a manner of recognizing the second lock signal as a start signal and eliminating a frequency offset and phase noise of the extracted valid data and by deciding whether a corresponding noise is removed;
converting the pass band digital signal into a frequency domain;
detecting a fourth lock signal by performing integer carrier frequency synchronization to compensate the frequency-domain-converted signal in a manner of recognizing the third lock signal as a start signal and estimating an integer multiplication of a subcarrier interval closest to an initial frequency offset and by deciding whether a corresponding noise is removed;
detecting a fifth lock signal by performing sampling frequency synchronization to carry out sampling on the compensated signal in a manner of recognizing the fourth lock signal as a start signal and by deciding whether a corresponding noise is removed;
detecting a sixth lock signal by estimating an order of a scattered pilot signal included in the received signal in a manner of recognizing the fifth lock signal as a start signal and by deciding whether a corresponding noise is removed;
performing a fine symbol timing synchronization to estimate a remaining window offset using the estimated scattered pilot in a manner of recognizing the sixth signal as a start signal; and
performing a channel equalization to correct a distortion of the received signal.

16. The method of claim 15, wherein in the fine symbol timing synchronization performing step, a fine symbol offset valid signal is generated to be outputted and wherein in the channel equalization performing step, the fine symbol offset valid signal is recognized as the start signal.

## Patentansprüche

1. Vorrichtung zur Synchronisationserfassung in einem digitalen Empfänger, Folgendes umfassend:
eine Vorverarbeitungseinheit (100), die ein analoges Signal empfängt und das empfangene analoge Signal in ein digitales Signal umwandelt;
eine Empfangssynchronisationseinheit (200), die eine Mehrzahl verschiedener Synchronisationseinheiten umfasst, die durch Empfangen des digitalen Signals nacheinander jeweils einen anderen Synchronisationsprozess Ausführen, wobei die Empfangssynchronisationseinheit (200) einen Start des Synchronisationsprozesses einer nächsten Synchronisationseinheit gemäß einem Vorhandensein oder Nichtvorhandensein der Synchronisationserfassung einer aktuellen Synchronisationseinheit steuert; und
eine Nachverarbeitungseinheit (300), die das synchronisationserfasste Signal decodiert,
**dadurch gekennzeichnet, dass**
die Empfangssynchronisationseinheit (200) eine automatische Verstärkungsregelungseinheit (201), eine Grobsymboltaktsynchronisationseinheit (203), eine Feinträgerfrequenzsynchronisationseinheit (205), eine Ganzzahlträgerfrequenzsynchronisationseinheit (209), eine Abtastfrequensynchronisationseinheit (213), eine Einheit zur Extraktion verstreuter Pilotsignale (215) und eine Feinsymboltaktsynchronisationseinheit (217) umfasst,
die Feinträgerfrequenzsynchronisationseinheit (205) ein von einer Sperrsignalsteuereinheit (211) eingegebenes Sperrsignal der Grobsymboltaktsynchronisationseinheit (203) als Startsignal einer Feinträgerfrequenzsynchronisationserfassung erkennt, einen Frequenzversatz und ein Phasenjitter der Vorverarbeitungseinheit (100) eliminiert und ein digitales Bandpasssignal in ein digitales Basisbandsignal umwandelt,
die Ganzzahlträgerfrequenzsynchronisationseinheit (209) ein von der Sperrsignalsteuereinheit (211) eingegebenes Sperrsignal der Feinträgerfrequenzsynchronisationseinheit (205) als Startsignal einer Ganzzahlträgerfrequenzsynchronisationserfassung erkennt und das durch die Feinträgerfrequenzsynchronisationseinheit (205) verarbeitete Signal durch Schätzen einer Ganzzahlmultiplikation eines einem anfänglichen Frequenzversatz am nächsten kommenden Intervalls eines Unterträgers ausgleicht und
die Abtastfrequensynchronisationseinheit (213) ein von der Sperrsignalsteuereinheit (211) eingegebenes Sperrsignal der Ganzzahlträgerfrequenzsynchronisationseinheit (209) als Startsignal einer Abtastfrequenzsynchronisationserfassung erkennt und ein Abtasten des ganzzahlträgerfrequenzsynchronisierten Signals ausführt.

2. Vorrichtung nach Anspruch 1, wobei die Vorverarbeitungseinheit (100) Folgendes umfasst:
einen Tuner, der ein Rundfunksignal eines spezifischen Kanals abstimmt, um es in ein Zwischenfrequenzsignal umzuwandeln; und
einen A/D-Wandler, der das umgewandelte Zwischenfrequenzsignal in ein digitales Signal umwandelt, um es an die Empfangssynchronisationseinheit (200) zu übermitteln.

3. Vorrichtung nach Anspruch 1, wobei die Empfangssynchronisationseinheit (200) Folgendes umfasst:
die Sperrsignalsteuereinheit (211), die ein Steuersignal zum Steuern des Starts des Synchronisationsprozesses der nächsten Synchronisationseinheit gemäß dem Vorhandensein oder Nichtvorhandensein der Synchronisationserfassung der aktuellen Synchronisationseinheit ausgibt; und
einen Sperrdetektor, der ein Ergebnis eines Vorhandenseins oder Nichtvorhandenseins der Synchronisationserfassung eines entsprechenden Empfangssignals an die Sperrsignalsteuereinheit (211) ausgibt, wobei über das Vorhandensein oder Nichtvorhandensein der Synchronisationserfassung jeweils durch die Synchronisationseinheiten der Empfangssynchronisationseinheit entschieden wird.

4. Vorrichtung nach Anspruch 1, wobei die automatische Verstärkungsregelungseinheit (201) durch Empfangen des digital umgewandelten Signals von der Vorverarbeitungseinheit (100) eine Verstärkung in einem digitalen Bereich ausgleicht, wobei der Sperrdetektor der automatischen Verstärkungsregelungseinheit (201) einen Durchschnittswert einer Empfangsleistung des Empfangssignals misst, um über eine Differenz zu einem voreingestellten Referenzwert zu entscheiden, und wobei, wenn der Durchschnittswert der Empfangsleistung gleich dem voreingestellten Referenzwert ist, der Sperrdetektor der automatischen Verstärkungsregelungseinheit (201) ein Sperrsignal an die Sperrsignalsteuereinheit (211) ausgibt.

5. Vorrichtung nach Anspruch 1, wobei die Grobsymboltaktsynchronisationseinheit (203) ein von der Sperrsignalsteuereinheit (211) eingegebenes Sperrsignal der automatischen Verstärkungsregelungseinheit (201) als Startsignal einer Grobsymboltaktsynchronisationserfassung erkennt und gültige Restdaten mit Ausnahme eines Schutzintervalls aus dem verstärkungskompensierten Signal extrahiert.

6. Vorrichtung nach Anspruch 3, wobei der Sperrdetektor der Grobsymboltaktsynchronisationseinheit (203) durch Messen eines Korrelationsdurchschnittsleistungswerts über eine Differenz zu einem voreingestellten Referenzwert entscheidet und ein Sperrsignal an die Sperrsignalsteuereinheit (211) ausgibt, wenn der gemessene Korrelationsdurchschnittsleistungswert größer als der voreingestellte Referenzwert ist.

7. Vorrichtung nach Anspruch 3, wobei der Sperrdetektor der Feinträgerfrequenzsynchronisationseinheit (205) durch Messen eines Taktfehlerdurchschnittswerts über eine Differenz zu einem voreingestellten Referenzwert entscheidet und ein Sperrsignal an die Sperrsignalsteuereinheit (211) ausgibt, wenn der gemessene Taktfehlerdurchschnittswert kleiner als der voreingestellte Referenzwert ist.

8. Vorrichtung nach Anspruch 1, wobei die Ganzzahlträgerfrequenzsynchronisationseinheit (209) ein von der Sperrsignalsteuereinheit (211) eingegebenes Sperrsignal der Grobsymboltaktsynchronisationseinheit (203) als Startsignal einer Ganzzahlträgerfrequenzsynchronisationserfassung erkennt und das von der Feinträgerfrequenzsynchronisationseinheit (205) verarbeitete Signal durch Schätzen einer Ganzzahlmultiplikation eines einem anfänglichen Frequenzversatz am nächsten kommenden Intervalls eines Unterträgers ausgleicht.

9. Vorrichtung nach Anspruch 3, wobei der Sperrdetektor der Ganzzahlträgerfrequenzsynchronisationseinheit (209) durch Messen eines Korrelationsdurchschnittsleistungswerts über eine Differenz zu einem voreingestellten Referenzwert entscheidet und ein Sperrsignal an die Sperrsignalsteuereinheit (211) ausgibt, wenn der gemessene Korrelationsdurchschnittsleistungswert größer als der voreingestellte Referenzwert ist.

10. Vorrichtung nach Anspruch 3, wobei der Sperrdetektor der Abtastfrequensynchronisationseinheit (213) durch Messen eines Taktfehlerdurchschnittswerts über eine Differenz zu einem voreingestellten Referenzwert entscheidet und ein Sperrsignal an die Sperrsignalsteuereinheit (211) ausgibt, wenn der gemessene Taktfehlerdurchschnittswert kleiner als der voreingestellte Referenzwert ist.

11. Vorrichtung nach Anspruch 1, wobei die Einheit zur Schätzung verstreuter Pilotsignale (215) ein von der Sperrsignalsteuereinheit (211) eingegebenes Sperrsignal der Abtastfrequensynchronisationseinheit (213) als Startsignal einer Schätzung verstreuter Pilotsignale erkennt und eine Ordnung eines in dem abgetasteten Signal enthaltenen verstreuten Pilotsignals schätzt.

12. Vorrichtung nach Anspruch 3, wobei der Sperrdetektor der Einheit zur Schätzung verstreuter Pilotsignale (215) über eine Differenz zwischen einem geschätzten Ordnungsindex verstreuter Pilotsignale und einem voreingestellten Index 1 verstreuter Pilotsignale entscheidet und wobei, wenn der geschätzte Ordnungsindex verstreuter Pilotsignale gleich dem voreingestellten Index 1 verstreuter Pilotsignale ist, der Sperrdetektor der Einheit zur Schätzung verstreuter Pilotsignale (215) ein Sperrsignal an die Sperrsignalsteuereinheit (211) ausgibt.

13. Vorrichtung nach Anspruch 1, wobei die Feinsymboltaktsynchronisationseinheit (217) ein von der Sperrsignalsteuereinheit eingegebenes Sperrsignal der Einheit zur Schätzung verstreuter Pilotsignale als Startsignal einer Feinsymboltaktsynchronisationserfassung erkennt und einen verbleibenden Fensterversatz der Grobsymboltaktsynchronisationseinheit auf der Grundlage des geschätzten verstreuten Pilotsignals schätzt.

14. Vorrichtung nach Anspruch 1, wobei die Feinsymboltaktsynchronisationseinheit (217) ein gültiges Feinsymbolversatzsignal erzeugt, um es an die Sperrsignalsteuereinheit (211) auszugeben.

15. Verfahren zur Synchronisationserfassung in einem digitalen Empfänger beim Empfangen eines digitalen Signals, Folgendes umfassend:
einen Schritt (a) des Umwandelns eines empfangenen analogen Signals in ein digitales Signal;
einen Schritt (b) des aufeinanderfolgenden Ausführens verschiedener Synchronisationsprozesse durch Empfangen des digitalen Signals und des Steuerns eines Starts eines nächsten Synchronisationsprozesses gemäß einem Vorhandensein oder Nichtvorhandensein der Synchronisationserfassung eines aktuellen Synchronisationsprozesses; und
einen Schritt (c) des Decodierens des synchronisierten Signals,
**dadurch gekennzeichnet, dass**
der Schritt (b) die folgenden Schritte umfasst:
Detektieren eines ersten Sperrsignals durch Wiederherstellen einer Verstärkung des digital umgewandelten Signals und durch Entscheiden, ob ein entsprechendes Rauschen entfernt ist;
Detektieren eines zweiten Sperrsignals durch Ausführen einer Grobsymboltaktsynchronisation in einer Weise des Erkennens des ersten Sperrsignals als Startsignal und des Extrahierens nur bereitzustellender gültiger Daten des verstärkungswiederhergestellten Signals und durch Entscheiden, ob ein entsprechendes Rauschen entfernt ist;
Detektieren eines dritten Sperrsignals durch Ausführen einer Feinträgerfrequenzsynchronisation zum Umwandeln eines digitalen Basisbandsignals in ein digitales Passbandsignal in einer Weise des Erkennens des zweiten Sperrsignals als Startsignal und des Eliminierens eines Frequenzversatzes und Phasenrauschens der extrahierten gültigen Daten und durch Entscheiden, ob ein entsprechendes Rauschen entfernt ist;
Umwandeln des digitalen Passbandsignals in einen Frequenzbereich;
Detektieren eines vierten Sperrsignals durch Ausführen einer Ganzzahlträgerfrequenzsynchronisation zum Kompensieren des frequenzbereichumgewandelten Signals in einer Weise des Erkennens des dritten Sperrsignals als Startsignal und des Schätzens einer Ganzzahlmultiplikation eines einem anfänglichen Frequenzversatz am nächsten kommenden Unterträgerintervalls und durch Entscheiden, ob ein entsprechendes Rauschen entfernt ist;
Detektieren eines fünften Sperrsignals durch Ausführen einer Abtastfrequenzsynchronisation zum Ausführen eines Abtastens des kompensierten Signals in einer Weise des Erkennens des vierten Sperrsignals als Startsignal und durch Entscheiden, ob ein entsprechendes Rauschen entfernt ist;
Detektieren eines sechsten Sperrsignals durch Schätzen einer Ordnung eines in dem empfangenen Signal enthaltenen verstreuten Pilotsignals in einer Weise des Erkennens des fünften Sperrsignals als Startsignal und durch Entscheiden, ob ein entsprechendes Rauschen entfernt ist;
Ausführen einer Feinsymboltaktsynchronisation, um einen verbleibenden Fensterversatz zu schätzen, unter Verwendung des geschätzten verstreuten Pilotsignals in einer Weise des Erkennens des sechsten Signals als Startsignal und
Ausführen einer Kanalentzerrung, um eine Verzerrung des empfangenen Signals zu korrigieren.

16. Verfahren nach Anspruch 15, wobei beim Schritt des Ausführens der Feinsymboltaktsynchronisation ein auszugebendes gültiges Feinsymbolversatzsignal erzeugt wird, und wobei beim Schritt des Ausführens der Kanalentzerrung das gültige Feinsymbolversatzsignal als Startsignal erkannt wird.

## Revendications

1. Appareil d'acquisition de synchronisation dans un récepteur numérique, comprenant :
une unité de prétraitement (100) recevant un signal analogique et convertissant le signal analogique reçu en un signal numérique ;
une unité de synchronisation de réception (200) comprenant une pluralité d'unités de synchronisation différentes, chacune réalisant séquentiellement un processus de synchronisation différent en recevant le signal numérique, l'unité de synchronisation de réception (200) commandant un démarrage du processus de synchronisation d'une unité de synchronisation suivante selon une présence ou une absence de l'acquisition de synchronisation d'une unité de synchronisation actuelle ; et
une unité de post-traitement (300) décodant le signal acquis en synchronisation,
**caractérisé en ce que**
l'unité de synchronisation de réception (200) comprend une unité de commande de gain automatique (201), une unité de synchronisation de rythme de symbole grossier (203), une unité de synchronisation de fréquence porteuse fine (205), une unité de synchronisation de fréquence porteuse en nombre entier (209), une unité de synchronisation de fréquence d'échantillonnage (213), une unité d'extraction de pilote dispersé (215) et une unité de synchronisation de rythme de symbole fin (217),
l'unité de synchronisation de fréquence porteuse fine (205) reconnaît un signal de verrouillage de l'unité de synchronisation de rythme de symbole grossier (203) entré depuis une unité de commande de signal de verrouillage (211) en tant que signal de démarrage d'une acquisition de synchronisation de fréquence porteuse fine, élimine un décalage de fréquence et une gigue de phase de l'unité de prétraitement (100), et convertit un signal numérique passe-bande en un signal numérique de bande de base,
l'unité de synchronisation de fréquence porteuse en nombre entier (209) reconnaît un signal de verrouillage de l'unité de synchronisation de fréquence porteuse fine (205) entré depuis l'unité de commande de signal de verrouillage (211) en tant que signal de démarrage d'une acquisition de synchronisation de fréquence porteuse en nombre entier et compense le signal traité par l'unité de synchronisation de fréquence porteuse fine (205) en estimant une multiplication par nombre entier d'un intervalle d'une sous-porteuse le plus proche d'un décalage de fréquence initial, et
l'unité de synchronisation de fréquence d'échantillonnage (213) reconnaît un signal de verrouillage de l'unité de synchronisation de fréquence porteuse en nombre entier (209) entré depuis l'unité de commande de signal de verrouillage (211) en tant que signal de démarrage d'une acquisition de synchronisation de fréquence d'échantillonnage et réalise un échantillonnage du signal synchronisé de fréquence porteuse en nombre entier.

2. Appareil selon la revendication 1, l'unité de prétraitement (100) comprenant :
un syntoniseur syntonisant un signal de radiodiffusion d'un canal spécifique pour le convertir en un signal de fréquence intermédiaire ; et
un convertisseur A/N convertissant le signal de fréquence intermédiaire converti en un signal numérique pour le délivrer à l'unité de synchronisation de réception (200).

3. Appareil selon la revendication 1, l'unité de synchronisation de réception (200) comprenant :
l'unité de commande de signal de verrouillage (211) fournissant en sortie un signal de commande pour commander le démarrage du processus de synchronisation de l'unité de synchronisation suivante selon la présence ou l'absence de l'acquisition de synchronisation de l'unité de synchronisation actuelle ; et
un détecteur de verrouillage fournissant en sortie un résultat d'une présence ou d'une absence de l'acquisition de synchronisation d'un signal de réception correspondant à l'unité de commande de signal de verrouillage (211) dans lequel la présence ou l'absence de l'acquisition de synchronisation est décidée par chacune des unités de synchronisation de l'unité de synchronisation de réception.

4. Appareil selon la revendication 1, dans lequel l'unité de commande de gain automatique (201) compense un gain dans une zone numérique en recevant le signal converti numériquement en provenance de l'unité de prétraitement (100), dans lequel le détecteur de verrouillage de l'unité de commande de gain automatique (201) mesure une valeur moyenne d'une puissance de réception du signal de réception pour décider d'une différence par rapport à une valeur de référence préétablie, et dans lequel si la valeur moyenne de la puissance de réception est égale à la valeur de référence préétablie, le détecteur de verrouillage de l'unité de commande de gain automatique (201) fournit en sortie un signal de verrouillage à l'unité de commande de signal de verrouillage (211).

5. Appareil selon la revendication 1, dans lequel l'unité de synchronisation de rythme de symbole grossier (203) reconnaît un signal de verrouillage de l'unité de commande de gain automatique (201) entré depuis l'unité de commande de signal de verrouillage (211) en tant que signal de démarrage d'une acquisition de synchronisation de rythme de symbole grossier et extrait des données valides restantes à l'exception d'un intervalle de garde du signal à gain compensé.

6. Appareil selon la revendication 3, dans lequel le détecteur de verrouillage de l'unité de synchronisation de rythme de symbole grossier (203) décide d'une différence par rapport à une valeur de référence préétablie en mesurant une valeur de puissance moyenne de corrélation et fournit en sortie un signal de verrouillage à l'unité de commande de signal de verrouillage (211) si la valeur de puissance moyenne de corrélation mesurée est plus grande que la valeur de référence préétablie.

7. Appareil selon la revendication 3, dans lequel le détecteur de verrouillage de l'unité de synchronisation de fréquence porteuse fine (205) décide d'une différence par rapport à une valeur de référence préétablie en mesurant une valeur moyenne d'erreur de rythme et fournit en sortie un signal de verrouillage à l'unité de commande de signal de verrouillage (211) si la valeur moyenne d'erreur de rythme mesurée est plus petite que la valeur de référence préétablie.

8. Appareil selon la revendication 1, dans lequel l'unité de synchronisation de fréquence porteuse en nombre entier (209) reconnaît un signal de verrouillage de l'unité de synchronisation de rythme de symbole grossier (203) entré depuis l'unité de commande de signal de verrouillage (211) en tant que signal de démarrage d'une acquisition de synchronisation de fréquence porteuse en nombre entier et compense le signal traité par l'unité de synchronisation de fréquence porteuse fine (205) en estimant une multiplication par nombre entier d'un intervalle d'une sous-porteuse le plus proche d'un décalage de fréquence initial.

9. Appareil selon la revendication 3, dans lequel le détecteur de verrouillage de l'unité de synchronisation de fréquence porteuse en nombre entier (209) décide d'une différence par rapport à une valeur de référence préétablie en mesurant une valeur de puissance moyenne de corrélation et fournit en sortie un signal de verrouillage à l'unité de commande de signal de verrouillage (211) si la valeur de puissance moyenne de corrélation mesurée est plus grande que la valeur de référence préétablie.

10. Appareil selon la revendication 3, dans lequel le détecteur de verrouillage de l'unité de synchronisation de fréquence d'échantillonnage (213) décide d'une différence par rapport à une valeur de référence préétablie en mesurant une valeur moyenne d'erreur de rythme et fournit en sortie un signal de verrouillage à l'unité de commande de signal de verrouillage (211) si la valeur moyenne d'erreur de rythme mesurée est plus petite que la valeur de référence préétablie.

11. Appareil selon la revendication 1, dans lequel l'unité d'estimation de pilote dispersé (215) reconnaît un signal de verrouillage de l'unité de synchronisation de fréquence d'échantillonnage (213) entré depuis l'unité de commande de signal de verrouillage (211) en tant que signal de démarrage d'une estimation de pilote dispersé et estime un ordre d'un signal de pilote dispersé inclus dans le signal échantillonné.

12. Appareil selon la revendication 3, dans lequel le détecteur de verrouillage de l'unité d'estimation de pilote dispersé (215) décide d'une différence entre un indice d'ordre de pilote dispersé estimé et un indice de pilote dispersé préétabli 1 et dans lequel si l'indice d'ordre de pilote dispersé estimé est égal à l'indice de pilote dispersé préétabli 1, le détecteur de verrouillage de l'unité d'estimation de pilote dispersé (215) fournit en sortie un signal de verrouillage à l'unité de commande de signal de verrouillage (211).

13. Appareil selon la revendication 1, dans lequel l'unité de synchronisation de rythme de symbole fin (217) reconnaît un signal de verrouillage de l'unité d'estimation de pilote dispersé entré depuis l'unité de commande de signal de verrouillage en tant que signal de démarrage d'une acquisition de synchronisation de rythme de symbole fin et estime un décalage de fenêtre restant de l'unité de synchronisation de rythme de symbole grossier sur la base du pilote dispersé estimé.

14. Appareil selon la revendication 1, dans lequel l'unité de synchronisation de rythme de symbole fin (217) génère un signal valide de décalage de symbole fin à fournir en sortie à l'unité de commande de signal de verrouillage (211).

15. Lors de la réception d'un signal numérique, procédé d'acquisition de synchronisation dans un récepteur numérique, comprenant :
une étape (a) de conversion d'un signal analogique reçu en un signal numérique ;
une étape (b) de réalisation séquentielle de processus de synchronisation différents en recevant le signal numérique et en commandant un démarrage d'un processus de synchronisation suivant selon une présence ou une absence de l'acquisition de synchronisation d'un processus de synchronisation actuel ; et
une étape (c) de décodage du signal synchronisé,
**caractérisé en ce que**
l'étape (b) comprend les étapes de :
détection d'un premier signal de verrouillage en récupérant un gain du signal converti numériquement et en décidant si un bruit correspondant est retiré ;
détection d'un deuxième signal de verrouillage en réalisant une synchronisation de rythme de symbole grossier de manière à reconnaître le premier signal de verrouillage en tant que signal de démarrage et à extraire des données valides du signal à gain récupéré à délivrer uniquement et en décidant si un bruit correspondant est retiré ;
détection d'un troisième signal de verrouillage en réalisant une synchronisation de fréquence porteuse fine pour convertir un signal numérique de bande de base en un signal numérique passe-bande de manière à reconnaître le deuxième signal de verrouillage en tant que signal de démarrage et à éliminer un décalage de fréquence et un bruit de phase des données valides extraites et en décidant si un bruit correspondant est retiré ;
conversion du signal numérique passe-bande dans un domaine fréquentiel ;
détection d'un quatrième signal de verrouillage en réalisant une synchronisation de fréquence porteuse en nombre entier pour compenser le signal converti dans le domaine fréquentiel de manière à reconnaître le troisième signal de verrouillage en tant que signal de démarrage et à estimer une multiplication par nombre entier d'un intervalle de sous-porteuse le plus proche d'un décalage de fréquence initial et en décidant si un bruit correspondant est retiré ;
détection d'un cinquième signal de verrouillage en réalisant une synchronisation de fréquence d'échantillonnage pour effectuer un échantillonnage sur le signal compensé de manière à reconnaître le quatrième signal de verrouillage en tant que signal de démarrage et en décidant si un bruit correspondant est retiré ;
détection d'un sixième signal de verrouillage en estimant un ordre d'un signal pilote dispersé inclus dans le signal reçu de manière à reconnaître le cinquième signal de verrouillage en tant que signal de démarrage et en décidant si un bruit correspondant est retiré ;
réalisation d'une synchronisation de rythme de symbole fin pour estimer un décalage de fenêtre restant à l'aide du pilote dispersé estimé de manière à reconnaître le sixième signal en tant que signal de démarrage ; et
réalisation d'une égalisation de canal pour corriger une distorsion du signal reçu.

16. Procédé selon la revendication 15, dans lequel, à l'étape de réalisation d'une synchronisation de rythme de symbole fin, un signal valide de décalage de symbole fin est généré pour être produit en sortie et dans lequel à l'étape de réalisation d'égalisation de canal, le signal valide de décalage de symbole fin est reconnu en tant que signal de démarrage.
